# EUROPEAN PATENT APPLICATION

(11) **EP 4 718 185 A1**
(43) Date of publication of application: **01.04.2026**
(21) Application number: 25200966.7
(22) Date of filing: 09.09.2025
(51) Int. Cl.: G05B 19/418

(54) **WORKING INSTRUCTION METHOD AND PRODUCTION CONTROL SYSTEM**

(30) Priority: 29.09.2024 CN 202411370342
(71) Applicant: Zhejiang Hengyi Petrochemical Co., Ltd., Zhejiang 311200 (CN)
(72) Inventor: JIN, Junliang, Hangzhou, 311200 (CN); QIU, Yibo, Hangzhou, 311200 (CN); GU, Chengdong, Hangzhou, 311200 (CN); SHEN, Haiming, Hangzhou, 311200 (CN); WANG, Jiawei, Hangzhou, 311200 (CN)
(74) Representative: Richly & Ritschel Patentanwälte PartG mbB

(57) **Abstract**

Provided are a working instruction method and a production control system. The method includes: obtaining (S110), by a first PLC (203), a first working instruction request including a working instruction identification requested by a target workstation from a second PLC (204); sending (S120), by the first PLC (203), a second working instruction request including the working instruction identification to a MES (202) based on the first working instruction request; receiving (S130), by the first PLC (203), a working instruction response including working instruction type information returned by the MES (202) based on the working instruction identification; and sending (S140), by the first PLC (203), the working instruction type information to a host computer (201), searching, in the host computer (201), working instruction contents based on the working instruction type information and sending the working instruction contents to a display device connected to the target workstation.

## Description

### TECHNICAL FIELD

The present disclosure relates to the field of automatic control technologies, particularly to the field of intelligent manufacturing.

### BACKGROUND

During a production process, there may be some abnormal situations at a workstation. When a technical person is not sufficient to handle the abnormal situations alone, a technical instruction is needed for the technical person. Using traditional technical instruction manuals, if an unexpected situation is encountered and it is unable to find and solve problems in a timely manner, it is easy to cause production accidents or reduce production efficiency.

### SUMMARY

The present disclosure provides working instruction method and apparatus, a device and a storage medium for solving one or more technical problems in the prior art.

As a first aspect, the present disclosure provides a working instruction method including:
obtaining, by a first PLC, a first working instruction request from a second PLC, where the first working instruction request includes a working instruction identification requested by a target workstation;
sending, by the first PLC, a second working instruction request to a MES based on the first working instruction request, where the second working instruction request includes the working instruction identification;
receiving, by the first PLC, a working instruction response returned by the MES based on the working instruction identification, where the working instruction response includes working instruction type information; and
sending, by the first PLC, the working instruction type information to the host computer, searching, in the host computer, working instruction contents based on the working instruction type information and sending the working instruction contents to a display device connected to the target workstation.

As a second aspect, the present disclosure provides a working instruction apparatus including:
a first transceiving module 710 configured to obtain a first working instruction request from a second PLC, where the first working instruction request includes a working instruction identification requested by a target workstation;
a second transceiving module 720 configured to send a second working instruction request to a MES based on the first working instruction request, and receive a working instruction response returned by the MES based on the working instruction identification, where the second working instruction request includes the working instruction identification, and the working instruction response includes working instruction type information; and
a third transceiving module 730 configured to send the working instruction type information to the host computer, search working instruction contents in the host computer based on the working instruction type information and send the working instruction contents to a display device connected to the target workstation.

As a third aspect, an electronic device is provided, which includes:
at least one processor; and
a memory connected in communication with the at least one processor, where
the memory stores an instruction executable by the at least one processor, and the instruction, when executed by the at least one processor, enables the at least one processor to execute the method of any one of embodiments of the present disclosure.

As a fourth aspect, a non-transitory computer-readable storage medium storing a computer instruction thereon is provided, where the computer instruction is used to cause a computer to execute the method of any one of the embodiments of the present disclosure.

As a fifth aspect, a computer program production is provided, including a computer program, the computer program, when executed by a processor, implement the method of any one of the embodiments of the present disclosure.

The technical solution provided by the present disclosure may reduce a probability of an accident and improve production efficiency through real-time communication and data processing between the MES, the first PLC, and the second PLC, and provide a technical instruction to a staff through the display device.

It should be understood that the content described in this part is not intended to identify critical or essential features of the embodiments of the present disclosure, nor is it used to limit the scope of the present disclosure. Other features of the present disclosure will be easily understood through the following description.

### BRIEF DESCRIPTION OF THE DRAWINGS

In the accompanying drawings, same or similar components or elements are represented by same reference numerals throughout the accompanying drawings, unless otherwise specified. The accompanying drawings may not necessarily be drawn to scale. It should be understood that the accompanying drawings only depict some embodiments provided according to the present disclosure and should not be considered as limiting the scope of the present disclosure.
FIG. 1 is a schematic flowchart diagram of a working instruction method according to an embodiment of the present disclosure.
FIG. 2 is a schematic structural diagram of a working instruction control system.
FIG. 3 is a schematic flowchart diagram of a working instruction method according to another embodiment of the present disclosure.
FIG. 4 is a schematic flowchart diagram of a working instruction method according to another embodiment of the present disclosure.
FIG. 5 is a schematic flowchart diagram of a working instruction method according to another embodiment of the present disclosure.
FIGS. 6a, 6b, 6c and 6d are schematic processing flow of working instruction.
FIG. 7 is a schematic block diagram of a working instruction apparatus according to an embodiment of the present disclosure.
FIG. 8 is a schematic block diagram of a working instruction apparatus according to another embodiment of the present disclosure.
FIG. 9 is a block diagram of an electronic device for implementing a working instruction method according to an embodiment of the present disclosure.

### DETAILED DESCRIPTION

Hereinafter the present disclosure is described in further detail below with reference to the accompanying drawings. The same reference numerals in the accompanying drawings indicate elements with the same or similar function. Although various aspects of embodiments are shown in the accompanying drawings, it is not necessary to draw the accompanying drawings to scale unless otherwise indicated.

In addition, in order to better illustrate the present disclosure, a number of specific details are given in specific implementations below. Those having skill in the art should understand that the present disclosure may also be implemented without certain specific details. In some examples, methods, means, components, circuits and the like which are well known to those having skill in the art are not described in detail, so as to highlight the main purpose of the present disclosure.

Before introducing the technical solution of the embodiments of the present application, further explanation will be given on technical terms that may be used in the present disclosure:

Manufacturing Execution System (MES): a software system used to monitor and manage a manufacturing process, capable of real-time collecting, processing, and analyzing of production data, optimizing production planning and resource allocation.

Programmable Logic Controller (PLC): an industrial digital computer used to control automation devices, such as a mechanical device and a robot on a production line, capable of performing a logical operation and processing on an input signal according to a preset program, and outputting a control signal to control operations of the devices.

Host computer: a computer system used to control or monitor other host computers or other terminal devices, corresponding to lower computers (such as PLC controllers).

Service data: service-related data generated during the manufacturing process, such as a device status, a product quantity, a production progress, and the like, the data is a basis for the MES and the PLC to make decisions and control.

In the solution of the embodiments of the present disclosure, a workstation may produce or transfer products. There may be a plurality of types of the products. Where main types of chemical fibers may include one or more of Partially Oriented Yarns (POYs), Fully Drawn Yarns (FDYs), Draw Textured Yarns (DTYs, or referred as low elasticity yarns), or the like. For example, specific types of the chemical fibers may include Polyester Partially Oriented Yarns, Polyester Fully Drawn Yarns, Polyester Drawn Yarns, Polyester Draw Textured Yarns, Polyester Staple Fiber (PSF), Polyamide 6 chips fiber grade (PA6) and the like.

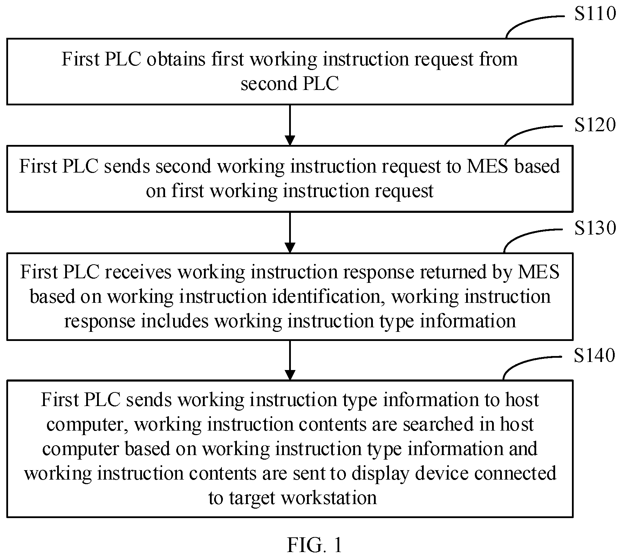

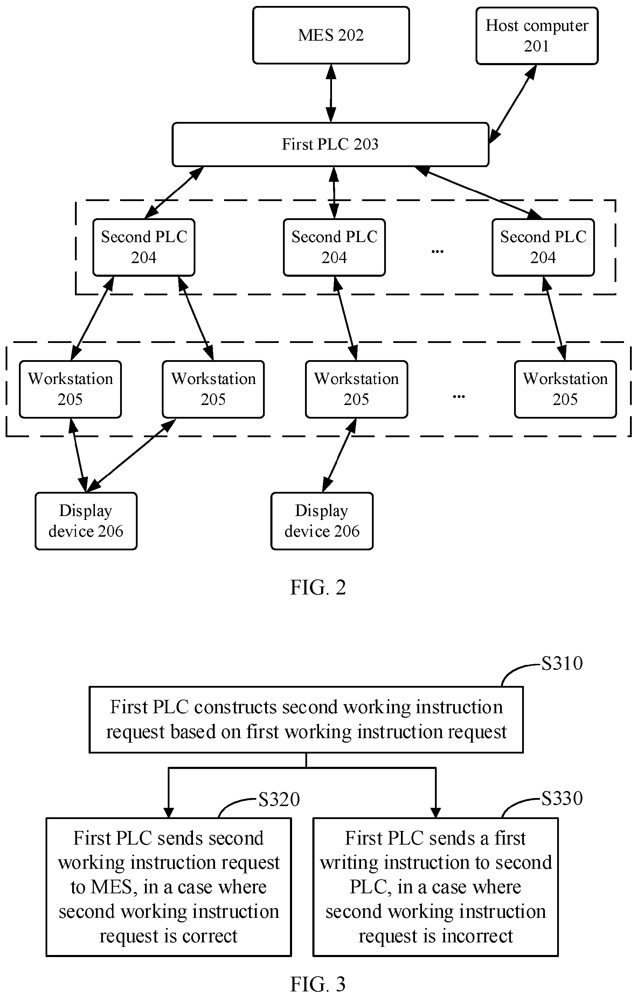

FIG. 1 is a schematic flowchart diagram of a working instruction method according to an embodiment of the present disclosure. The method is applied to a production control system. Referring to FIG. 2, the production control system may include a host computer 201, a manufacturing execution system (MES) 202, a first programmable logic controller (PLC) 203, second PLCs 204, workstations 205 and display devices 206. The host computer 203 is connected to the MES 202 and the display device 206, the first PLC 203 is connected to the MES 202 and one or more of the second PLCs 204, a second PLC 204 is connected to one or more of the workstations 205, and a display device is connected to one or more of the workstations 205. One production device may include oner or more workstations.

In an implementation, the working instruction method may include:
In S110, the first PLC obtains a first working instruction request from the second PLC, where the first working instruction request includes a working instruction identification requested by a target workstation.

In S120, the first PLC sends a second working instruction request to the MES based on the first working instruction request, where the second working instruction request includes the working instruction identification.

In S130, the first PLC receives a working instruction response returned by the MES based on the working instruction identification, where the working instruction response includes working instruction type information.

In S140, the first PLC sends the working instruction type information to the host computer, working instruction contents are searched in the host computer based on the working instruction type information and the working instruction contents are sent to a display device connected to the target workstation.

In the embodiment of the present disclosure, the first working instruction request is collected and processed by the first PLC. The first working instruction request may include a request automatically sent from the target workstation to the second PLC or a request actively sent to the second PLC by a staff operating the target workstation through a button or a screen. The second PLC collects the request and sends it to the first PLC. The first working instruction request may also include the working instruction identification request by the target workstation. The first PLC may also be referred to as IT PLC, and the second PLC may also be referred to as ME PLC. The target workstation and the display device may be integrated into the same physical device, or may be two separate independent devices.

In the embodiment of the present disclosure, after receiving the first working instruction request, the first PLC may first verify whether a format of the first working instruction request is correct, and then obtain the second working instruction request by processing based on the first working instruction request after verifying the format is correct, and send the second working instruction request to the MES.

In the embodiment of the present disclosure, the MES is used to monitor a status of each workstation in real-time. The MES parses the working instruction identification in the second working instruction request sent by the first PLC, and obtains a working instruction type of the target workstation that requires a working instruction based on a parsing result. The working instruction type of the target workstation may include some abnormal or unexpected situations during a production process, such as handling of tangled yarn spindles, handling of spindle carts that cannot pass through a workstation normally, handling of unexpected situations in a workshop, handling of staff fainting, and the like. After obtaining the working instruction type, the MES will send the corresponding working instruction contents back to the first PLC.

In the embodiment of the present disclosure, the first PLC receives the working instruction response sent by the MES and obtains the working instruction type information from it to send to the host computer. After receiving the working instruction type sent by the first PLC, the host computer searches the corresponding working instruction contents in a database based on the working instruction type information. For example, if the working instruction type is tangling of yarn spindles and a processing method searched in the database is to cut off waste yarns, the host computer may download a video or picture process of how to cut off the waste yarns and send it to the display device connected to the target workstation to provide the working instruction.

According to the embodiment of the present disclosure, real-time communication and data processing between the MES, the first PLC, and the second PLC, as well as a technical instruction provided to the staff through the display device, may reduce a probability of an accident and improve production efficiency.

In an implementation, the working instruction identification includes a service identification that needs to request the working instruction written to the second PLC by the target workstation.

In the embodiment of the present disclosure, a scanning cycle of the first PLC may be set, for example, scanning once every 2 seconds, scanning once every 5 seconds, to obtain an identification of the second PLC according to the set cycle. The identification may be the working instruction identification or other work identification. The working instruction identification includes the service identification, which is used to indicate data exchange between the workstation and the second PLC, and may include a code of the target workstation, an IP address of the display device corresponding to the target workstation, and an IP address of the target workstation.

In the embodiment of the present disclosure, the first PLC obtains the working instruction identification and determines whether the working instruction is needed. If the working instruction is needed, the first PLC obtains the first working instruction request sent by the target workstation to the second PLC from the second PLC.

According to the embodiment of the present disclosure, whether the working instruction is needed is determined by obtaining the working instruction identification, reducing a manual judgment process and improving efficiency and accuracy.

In an implementation, the method further includes:
activating a working instruction function of the first PLC in a case of satisfying one or more of following conditions:
the first PLC activates an online mode;
a type of the received request is the working instruction;
the target workstation needs the working instruction; or
the first PLC is successfully connected to the MES and the host computer, respectively.

In the embodiment of the present disclosure, the first PLC may check its working mode at beginning of an operation or before preparing for the working instruction. Whether the online mode of the first PLC is activated is determined, if it is in an offline mode, the first PLC may be adjusted to the online mode. For example, the first PLC may check a value of a parameter IT-PLC ONLINE used to represent the working mode of the first PLC. If IT-PLC ONLINE=1, it may be determined that the online mode of the first PLC is activated and the working instruction function of the first PLC may be activated. If IT-PLC ONLINE=0, it may be determined that the first PLC is in the offline mode, and the working instruction function may be left off for now and may be activated after the first PLC is adjusted to the online mode.

In the embodiment of the present disclosure, the first PLC may determine whether the type of the received request is a type of requesting the working instruction. If it is, the working instruction function of the first PLC may be activated. Otherwise, the function is not activated. For example, the first PLC may check a value of a parameter REQUEST-TYPE used to represent the requested type. If REQUEST-TYPE=WI and WI is of a type of the working instruction, the received request is of the type of the working instruction.

In the embodiment of the present disclosure, the first PLC may determine whether the workstation needs the working instruction. If the working instruction is not needed, the first PLC may temporarily disable the working instruction function. For example, whether a connection relationship between the first PLC and the MES, as well as between the first PLC and the host computer, is connective respectively, is determined. If the connection relationship between the first PLC and the MES, as well as between the first PLC and the host computer, is not connective respectively, the first PLC, host computer, and first PLC and the MES may be connected.

According to the embodiment of the present disclosure, determining the working mode of the first PLC may ensure normal operation of the device, reduce a process of manual inspection for the device, and improve efficiency and accuracy.

In an implementation, the method further includes:
activating a working instruction function of the second PLC in a case of satisfying one or more of following conditions:
the second PLC activates an online mode;
the second PLC activates an automatic mode;
a type of the received request is working instruction; or
the received request has a correct format.

In the embodiment of the present disclosure, when the second PLC starts working or before preparing for the working instruction, the second PLC may determine its own working status, which may include an online mode status, an automatic mode status, and the type of the working instruction of the second PLC. The first PLC may also be used to determine the working status of the second PLC, for example, the first PLC receives working status information sent by the second PLC. The first PLC determines whether the second PLC activates the online mode based on the working status information, and if the second PLC does not activate the online mode, it adjusts the second PLC to the online mode. For example, whether the second PLC activates the automatic mode is determined, and if the second PLC does not activate the automatic mode, it can be adjusted to the automatic mode. For example, whether the type of the request received by the second PLC from the workstation is the working instruction is determined, and if the type of the request received by the second PLC from the workstation is not the working instruction, the second PLC will not activate the working instruction function. For example, when the first PLC obtains the working instruction request from the second PLC, the second PLC may determine the format of the working instruction request, after determining that it is correct, the second PLC sends the working instruction request to the first PLC. If the second PLC determines that there is an error in obtained instruction, it calls a Function Computing (FC) module to write an error code of 3543, which may be obtained by querying an error code table, and different error codes represent different types of errors. The error code table may be pre-set and stored in the first PLC, the second PLC, or a storage space readable by a PLC.

According to the embodiment of the present disclosure, determining the working status of the second PLC may ensure normal operation of a device, reduce the process of manual inspection of the device, and improve efficiency and accuracy.

FIG. 3 is a schematic flowchart diagram of a working instruction method according to another embodiment of the present disclosure. The method may include one or more features of the above method. In an implementation, the step S120 of sending by the first PLC the second working instruction request to the MES based on the first working instruction request includes following steps.

In S130, the first PLC constructs the second working instruction request based on the first working instruction request, where the second working instruction request includes the working instruction identification carried in the first working instruction request and information of the target workstation.

In S320, the first PLC sends the second working instruction request to the MES, in a case where the second working instruction request is correct.

In the embodiment of the present disclosure, after the first PLC receives the first working instruction request sent by the second PLC, it may send an acknowledgement signal to the second PLC. The first PLC may parse the first working instruction request and reconstruct the second working instruction request. The second working instruction request may include the working instruction identification carried in the first working instruction request, the information of the target workstation and the like, and a format of the second working instruction request may be standardized to a format that the MES can handle. If first working instruction requests have significant differences in formats due to coming from different devices, they may be uniformly adjusted through second working instruction requests. If the formats of the first working instruction requests are uniform, they may also be forwarded directly as the second working instruction requests without adjustment. In addition, the first PLC may also send a signal indicating that the MES will be reset after receiving the second working instruction request.

In the embodiment of the present disclosure, the first PLC determines whether the constructed second working instruction request is correct. If the second working instruction request is correct, the request is placed in a sending data block (DB) of the first PLC. When sending the DB to the MES, information in the second working instruction request may be brought to the MES.

In an implementation, the method further includes following step.

In S330, the first PLC sends a first writing instruction to the second PLC, in a case where the second working instruction request is incorrect, the first writing instruction includes a first error code for indicating that the second working instruction request is incorrect.

In the embodiment of the present disclosure, if the second working instruction request is incorrect, a function module may be called to construct the first writing instruction including the first error code. The first PLC may first determine whether the first writing instruction is correct. Sending the correct first writing instruction to the second PLC may send the first error code indicating that the second working instruction request is incorrect to the second PLC.

According to the embodiments of the present disclosure, the first PLC constructs the second working instruction request, determines it is correct and sends it to the MES, which may reduce occurrence of incorrect, missed, and erroneous signals between devices and improve work efficiency and accuracy.

In an implementation, the method further includes:
sending, by the first PLC, a second writing instruction to the second PLC, in a case where the first writing instruction is incorrect, the second writing instruction includes a second error code for indicating that the first writing instruction is incorrect.

In the embodiment of the present disclosure, after the first PLC determines that the first writing instruction is incorrect, it may call the function module to construct the second writing instruction including the second error code, and send the second writing instruction to the second PLC.

In the embodiment of the present disclosure, after sending the second working instruction request to the MES, the first PLC may reset the sending data block of the first PLC, resetting includes initializing contents in the sending data block.

According to the embodiment of the present disclosure, the first PLC constructs the second working instruction request, determines it is correct and sends it to the MES, which may reduce occurrence of incorrect, missed, and erroneous signals between devices, and improve work efficiency and accuracy.

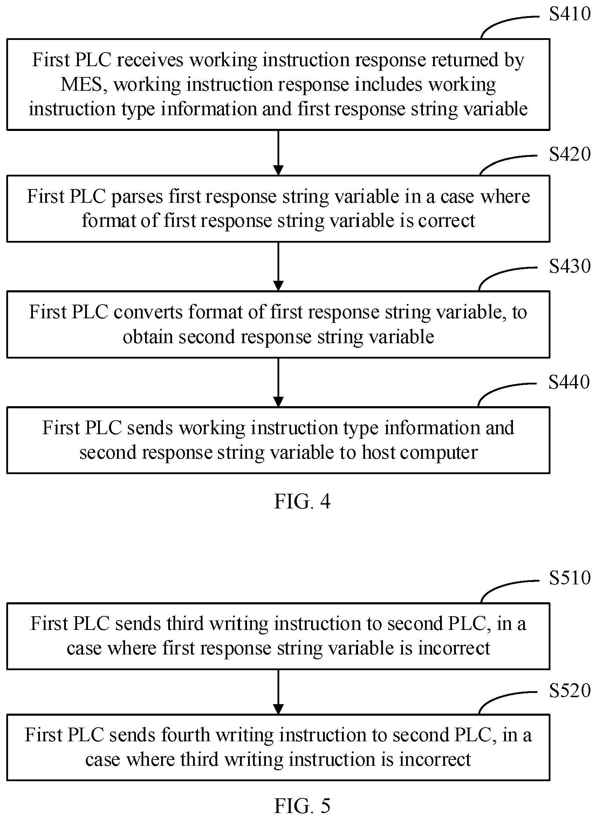

FIG. 4 is a schematic flowchart diagram of a working instruction method according to another embodiment of the present disclosure. The method may include one or more features of the above method. In an implementation, the step S130 of receiving, by the first PLC, the working instruction type information returned by the MES based on the working instruction identification includes following steps.

In S410, the first PLC receives the working instruction response returned by the MES, the working instruction response includes the working instruction type information and a first response string variable, where the working instruction type information includes a working type of the target workstation which needs an instruction, and where the first response string variable is one or more of a type, a serial number or associated display device information of the target workstation obtained by parsing the information of the target workstation by the MES.

In S420, the first PLC parses the first response string variable in a case where a format of the first response string variable is correct.

In S430, the first PLC converts the format of the first response string variable, to obtain a second response string variable.

In S440, the first PLC sends the working instruction type information and the second response string variable to the host computer.

In the embodiment of the present disclosure, if the MES receives the second working instruction request sent by the first PLC, the MES may send the working instruction response back to the first PLC. The working instruction response may include the working instruction type information and the first response string variable. The working instruction type information may be the working type which needs the instruction of the workstation. The first response string variable may include the workstation corresponding to the working instruction response, the display device associated with the workstation, a working instruction manner and the like, which are string variables that can be recognized by computer language. If the MES does not receive the second working instruction request sent by the first PLC, the MES may return an empty or incorrect working instruction type response to the first PLC, and the first PLC may resend the second working instruction request.

In the embodiment of the present disclosure, the first PLC may send a confirmation signal to the MES after receiving the working instruction type information that is not empty from the MES. The first PLC constructs the second response string variable based on the parsed first response string variable and by converting the format of the first response string variable. Variable information contained in the second response string variable may be the same as the original first response string variable, corresponding to the working instruction returned by the MES. A character format of the second response string variable may be a character format which is capable of being received and processed by the host computer. The first PLC sends the working instruction type information and the second response string variable to the host computer.

According to the embodiment of the present disclosure, constructing the second response string variable by parsing the first response string variable and converting the format of the first response string variable may improve stability of information exchange and enhance adaptability of information between different devices.

FIG. 5 is a schematic flowchart diagram of a working instruction method according to another embodiment of the present disclosure. The method may include one or more features of the above method. In an implementation, the method further includes following steps.

In S510, the first PLC sends a third writing instruction to the second PLC, in a case where the first response string variable is incorrect, the third writing instruction includes a third error code for indicating that the first response string variable is incorrect.

In S520, the first PLC sends a fourth writing instruction to the second PLC, in a case where the third writing instruction is incorrect, the fourth writing instruction includes a fourth error code for indicating that the third writing instruction is incorrect.

In the embodiment of the present disclosure, the first PLC may determine whether the format of the first response string variable is correct. If the first response string variable is correct, it will be parsed. If the format of the first response string variable is incorrect, the function module is called to construct the third writing instruction that includes the third error code. After the first PLC determines that the third writing instruction is correct, it may send the third writing instruction to the second PLC. After the first PLC determines that the third writing instruction is incorrect, it may call the function module to construct the fourth writing instruction that includes the fourth error code, and then send the fourth writing instruction to the second PLC.

In the embodiment of the present disclosure, the first PLC may also determine whether the format of the first response string variable contains an error code (EC). If the first response string variable contains the EC, a receiving data block of the first PLC is reset. If the format of the first response string variable is incorrect, the function module is called to construct the third writing instruction that includes the third error code. After the first PLC determines that the third writing instruction is correct, it may send the third writing instruction to the second PLC. After the first PLC determines that the third writing instruction is incorrect, it may call the function module to construct the fourth writing instruction including the fourth error code, and then send the fourth writing instruction to the second PLC.

According to the embodiment of the present disclosure, by verifying the format and the EC of the first response string variable, stability of interaction between devices may be improved, and a probability of information transmission errors between devices may be reduced.

In an implementation, searching, in the host computer, the working instruction contents based on the working instruction type information and sending the working instruction contents to the display device connected to the target workstation include:
searching, in the host computer, corresponding working instruction contents in a working instruction database based on the working instruction type information; and
sending, by the host computer, the working instruction contents to the display device connected to the target workstation, based on the type, the serial number and the associated display device information of the target workstation.

In the embodiment of the present disclosure, the host computer may be a Supervisory Control and Data Acquisition (SCADA) system. After receiving the working instruction type information and the second response string variable, the host computer may retrieve the corresponding working instruction contents from the database based on the corresponding instruction type and the instruction manner. Then, the working instruction contents may be sent to the display device associated with the workstation that requires the working instruction. For example, the instruction type is to guide reading of yarn cart barcodes, and the instruction manner is video instruction. The host computer selects a video containing the reading of the yarn cart barcodes from the database and sends it to the display device, or the host computer selects multiple videos containing the reading of the yarn cart barcodes from the database and sends them to the display device for the staff to choose from.

In an approach, the host computer may search a serial number, an address, and other information of the associated display device based on the type, the serial number, and other information of the target workstation parsed from the string variable, and send the working instruction contents to the display device based on the information of the display device. In another approach, the host computer may send the working instruction contents to the display device associated with the target workstation based on the serial number, the address, and other information parsed from the string variable.

According to the embodiment of the present disclosure, using the host computer to select the corresponding instruction contents based on the instruction type may provide more specific and vivid working instruction, improve quality of the working instruction, and optimize the working instruction process.

In an implementation, the method further includes:
receiving, by the first PLC, working instruction completion information returned by the host computer; and
performing, by the first PLC, a reset operation, in a case where a format of the working instruction completion information is correct.

In the embodiment of the present disclosure, the host computer may send the working instruction completion information to the first PLC after sending the instruction contents to the display device. The host computer may also send the instruction completion information back to the first PLC after the display device has played the data sent by the host computer or after the staff of the target workstation has voluntarily ended playback. The first PLC receives the instruction completion information and determines whether a format of the instruction completion information is correct. If the instruction completion information is correct, a reset operation is performed on the first PLC.

According to the embodiment of the present disclosure, using the first PLC to determine whether the instruction completion information returned by the host computer is correct may accurately obtain a progress of an instruction process, improve efficiency of the working instruction, and optimize the working instruction process.

In an implementation, the method further includes:
resetting a control bit corresponding to the first PLC to zero;
resetting a data region of the MES; and
resetting a data region of the host computer.

In the embodiment of the present disclosure, at an end of the working instruction, the first PLC may call a function FC module to reset the control bit corresponding to the first PLC, the MES, and the host computer to zero.

According to the embodiment of the present disclosure, resetting the device to zero through the function module may prepare for next working instruction, avoid data errors, and improve accuracy of the working instruction.

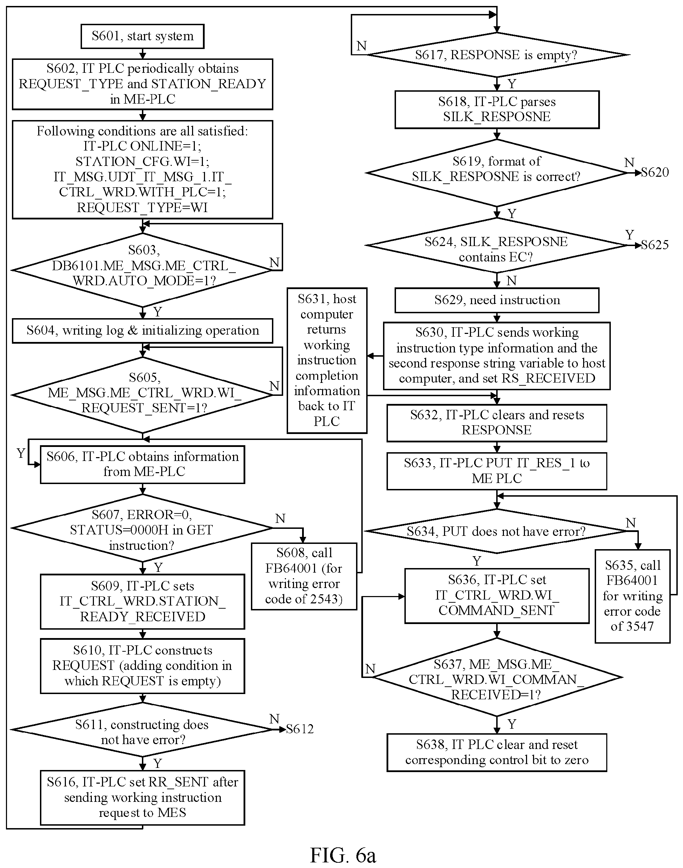

FIG. 6a is a schematic processing flow of working instruction, taking the first PLC as an information technology (IT) PLC and the second PLC as a mechanism engineering (ME) PLC as an example, the flow includes following steps.

In S601, a system is started.

In S602, the IT PLC periodically obtains ME_SSG.ME-SILK_MSG.REQUEST_TYPE (the TYPE is a type of service data written by the ME PLC) and ME_MSG.ME_CTRL_WRD.STATION_READY (the ME PLC determines a product arrival).

When one or more of the following conditions are satisfied, the IT PLC may activate the working instruction function (or start a working guidebook):
IT-PLC ONLINE=1; (an online status of the IT PLC is 1);
STATION_CFG.WI=1; (the working guidebook is activated, a status of CFG.WI is 1);
IT_MSG.UDT_IT_MSG_1.IT_CTRL_WRD.WITH_PLC=1 (the online status of the IT PLC is 1); (The condition for implementing an online process must simultaneously meet: IT-PLC operates in the "online" mode; STATION _CFG.TR=1; WITH_PLC=1; AUTO_MODE=1. Here, WITH_PCL=1 indicates that an IT-PLC online/offline knob is turned to an online position); or
ME_MSG.ME_SILK_MSG.REQUEST_TYPE=WI (a response type is a type of working instruction (WI)).

In S603, it is determined whether DB6101.ME_MSG.ME_CTRL_WRD.AUTO_MODE= 1 is established. If it is 1, step S604 is performed, and if it is not 1, the step S603 is re-performed.

Where the instruction ME_MSG.ME_CTRL_WRD.AUTO_MODE indicates an automatic mode of the ME-PLC, DB6101 indicates a target data block storing the above instruction.

In S604, an operation of writing a log and initializing is performed.

In S605, it is determined whether ME_MSG.ME_CTRL_WRD.WI_REQUEST_SENT is 1 (an example of determining whether working instruction is needed). If it is 1, step S606 is performed, and if it is not 1, the step S605 is re-performed.

In S606, the IT-PLC obtains ME MSG.ME SILK MSG FROMME-PLC through a GET instruction, that is, obtains the first working instruction request form the ME-PLC.

In S607, it is determined whether an ERROR indication in the GET instruction of the step S606 is 0, and whether a STATUS indication is 0000H, if the GET instruction is not 0, step S608 is performed, and if the GET instruction is 0, step S609 is performed.

Here, ERROR=0 means the GET instruction does not have an error. STATUS=0000H means that the status value=0, H means hexadecimal. The GET instruction is an instruction obtained by the IT-PLC from the ME-PLC.

In S608, if the condition in the step S607 is not 0, an FB64001 is called (for writing the error code of 3543 which indicating that the first working instruction request is incorrect), and the step S606 is re-performed. Where different error codes may represent different types of errors. Here, FB represents a module having a function of writing an error code. Where the FB64001 is a serial number of the function module, which may be used to write different error codes.

In S609, if the condition in the step S607 is 0, the IT-PLC sets IT_CTRL_WRD.STATION_RECEIVED.

In S610, the IT-PLC constructs SILK_REQUEST (the second working instruction request) (the MES is reset after receiving data) (a condition in which the SILK_REQUEST is empty may be added).

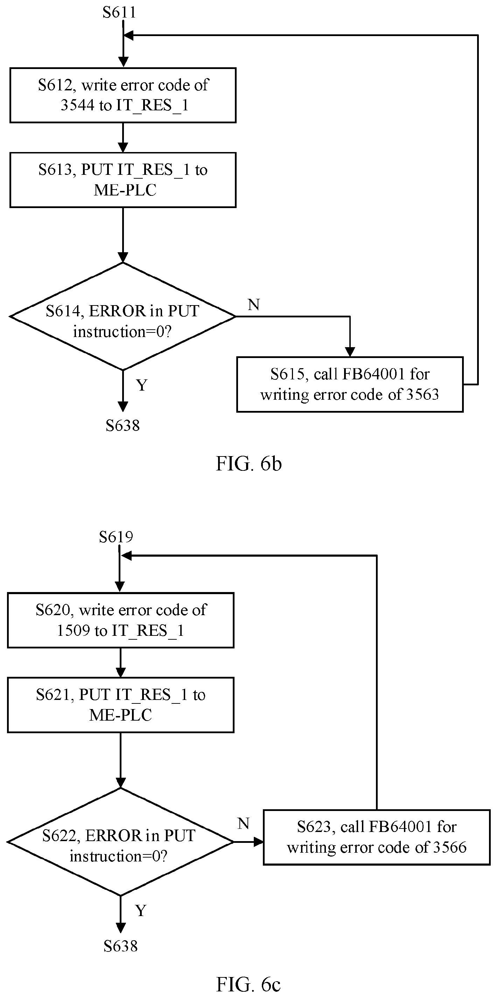

In S611, it is determined whether the constructing has an error, and if the constructing has the error, step S612 is performed (referring to FIG. 6b), and if the constructing does not have the error, step S616 is performed.

In S612, if the constructing has the error, the error code of 3544 is written to IT_RES_1 (a function module having a function module serial number of FC64002 in the IT PLC writes the error code in the IT_RES_1, the FC64002 is a function module for writing the error code, the IT_RES_1 is a self-defined data structure).

In S613, the IT_RES_1 is sent to the ME-PLC through a PUT instruction (the first writing instruction).

In S614, it is determined whether an ERROR in the PUT instruction is 0, if the ERROR in the instruction is not 0, step S615 is performed, and if the ERROR in the instruction is 0, step S635 is performed.

In S615, if the ERROR in the PUT instruction is not 0 (that is the instruction has the error), the FB64001 is called (for writing an error code of 3563, that is constructing the second writing instruction), then the step S612 is returned.

In S616, if the constructing does not has the error, the IT-PLC set RR_SENT after sending the constructed working instruction request to the MES.

In S617, it is determined whether SILK_RESPONSE (a response string sent to the IT PLC by the MES, here, MI_RESPONSE. SILK_RESPONSE1 indicates a response string (the first response string variable) sent to the IT-PLC by the MES, DB6101.MI_RESPONSE.SILK_RESPONSE1 is a variable allocated by the IT-PLC for a workstation 6101, and is used in a DB block to store response string sent to IT-PLC by the MES) is empty. If it is empty, the step S617 is re-performed to re-determine, and if it is not empty, step S618 is performed.

In S618, if the SILK_RESPOSNE (the response string sent to the IT PLC by the MES) is not empty, the IT-PLC parses the SILK _RESPOSNE (the response string sent to the IT PLC by the MES).

In S619, it is determined whether a format of the SILK_RESPOSNE is correct, if it is incorrect, step S620 is performed (referring to FIG. 6c), if it is correct, step S624 is performed (for example, the IT-PLC extracts first three bits and last three bits in the string MI_RESPONSE.SILK_RESPONSE1 (the first response string variable), and converting the first three bits into a target integer type (the second response string variable)).

(Here, a type name of the target integer type is "int". It should be noted that adding format verification is a secondary verification to ensure that the format of the response string returned by the MES is correct).

In S620, if the format of the SILK_RESPOSNE is incorrect, the FB64011 is called (that is, for constructing the third writing instruction), then an error code of 1509 is written to the IT_RES_1.

In S621, the IT_RES_1 is sent to the ME-PLC through a PUT instruction (the third writing instruction).

In S622, it is determined whether an ERROR in the PUT instruction is 0, if it is not 0, step S623 is performed, and if it is 0, step S635 is performed.

In S623, if the ERROR in the PUT instruction is not 0, the FB64001 is called (for writing an error code of 3566, that is constructing the fourth writing instruction), then step S620 is performed.

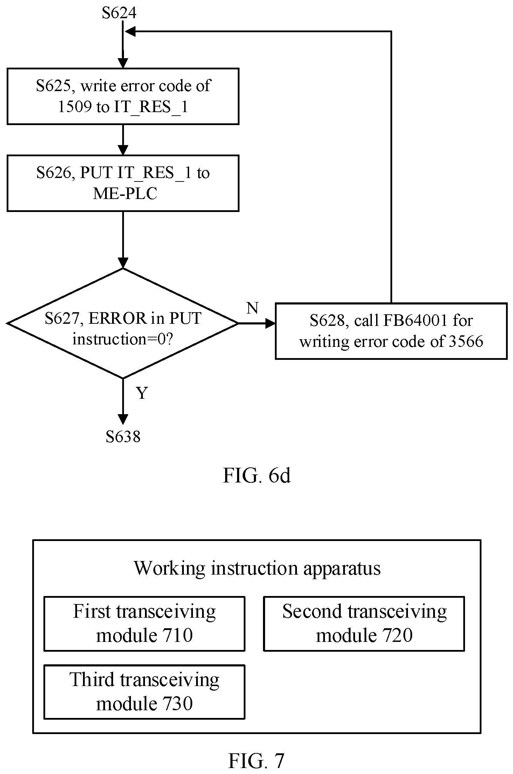

In S624, it is determined whether the SILK_RESPOSNE contains EC, if it does not contain the EC, step S624 is performed (referring to FIG. 6d), and if it contains the EC, step S629 is performed.

In S625, if the EC is not contained, the FB64001 is called (that is for constructing the third writing instruction), then the error code of 1509 is written to the IT_RES_1.

In S626, the IT_RES_1 is sent to the ME-PLC through the PUT instruction (the third writing instruction).

In S627, it is determined whether the ERROR in the PUT instruction is 0, if the ERROR in the instruction is not 0, step S628 is performed, if the ERROR in the instruction is 0, step S635 is performed.

In S628, if the ERROR in the PUT instruction is not 0 (the instruction has an error), the FB64001 is called (for writing the error code of 3566, that is constructing the fourth writing instruction), then step the S625 is performed.

In S629, it is determined the type of the working instruction, for example, the type of the working instruction is a need of an instruction.

In S630, if the SILK_RESPOSNE contains EC, the IT-PLC sends the working instruction type information and the second response string variable to the host computer, and set the RS_RECEIVED.

In S631, the host computer returns the working instruction completion information back to the IT PLC.

In S632, the IT-PLC clears and resets a response, for example, the SILK_RESPONSE returned by the host computer.

In S633, the IT-PLC puts the IT_RES_1 to the ME PLC.

In S634, it is determined whether a PUT has an error, if it does not have, step S636 is performed, and if it has, step S635 is performed.

In S635, if the PUT has the error, the FB64001 is called (for writing an error code of 3547), then step S633 is returned.

In S636, if the PUT does not has the error, the IT-PLC set a working instruction sending command, for example, IT_CTRL_WRD.WI_COMMAND_SENT, then step S637 is performed.

In S637, it is determined whether a working instruction receiving command, for example, ME_MSG.ME_CTRL_WRD.WI_COMMAND_RECEIVED, in the ME-PLC is 1, if it is not 1, the step S636 is re-performed, and if it is 1, step S638 is performed.

In S638, a function FC27 is called to perform a shifting process and the like on a queue in a DB6201 (data in the DB6201 may be in a form of an array, a first array in the DB6201 is defined as an interface, the data in the DB6201 may be shifted forward, after data interaction is completed, data in the first array may be deleted, at this time, the FC27 may be called to move subsequent data forward one bit in sequence).

Meanwhile, the IT PLC may clear and reset the corresponding control bit to zero, as shown in the following example:
STATION_READY_RECEIVED; (the IT PLC determines receipt of a product arrival at a workstation).
RR_SENT; (the IT PLC writes to the SILK_REQUEST then resets it).
RS_RECEIVE; (the IT PLC receives data of the MES then resets it).
MES_DATA_SENT; (the IT PLC determines the service data has been sent).
Resetting a corresponding service data region:
Calling a FC64006 to reset the ME_SILK_MSG.
Calling a FC64015 to clear and reset data in the IT_RES_1.
Explanation: resetting of the DB6101.ME_SILK_MSG is considered to continue a previous data processing process in a case of conditional false triggering.

FIG. 7 is a schematic block diagram of a working instruction apparatus according to an embodiment of the present disclosure. The working instruction apparatus is applied to a production control system, characterized in that the production control system includes a host computer, a manufacturing execution system (MES), a first programmable logic controller (PLC), second PLCs, workstations and display devices, the host computer is connected to the first PLC and the display devices respectively, the first PLC is connected to the MES and one or more of the second PLCs, a second PLC is connected to one or more of the workstations, and a display device is connected to one or more of the workstations.

The working instruction apparatus includes:
a first transceiving module 710 configured to obtain a first working instruction request from the second PLC, where the first working instruction request includes a working instruction identification requested by a target workstation;
a second transceiving module 720 configured to send a second working instruction request to the MES based on the first working instruction request, and receive a working instruction response returned by the MES based on the working instruction identification, where the second working instruction request includes the working instruction identification, and the working instruction response includes working instruction type information; and
a third transceiving module 730 configured to send the working instruction type information to the host computer, search working instruction contents in the host computer based on the working instruction type information and send the working instruction contents to a display device connected to the target workstation.

The above first transceiving module 710, second transceiving module 720 and third transceiving module 730 may be deposed in the first PLC.

In an implementation, the working instruction identification includes a service identification, which needs to request a working instruction, written to the second PLC by the target workstation.

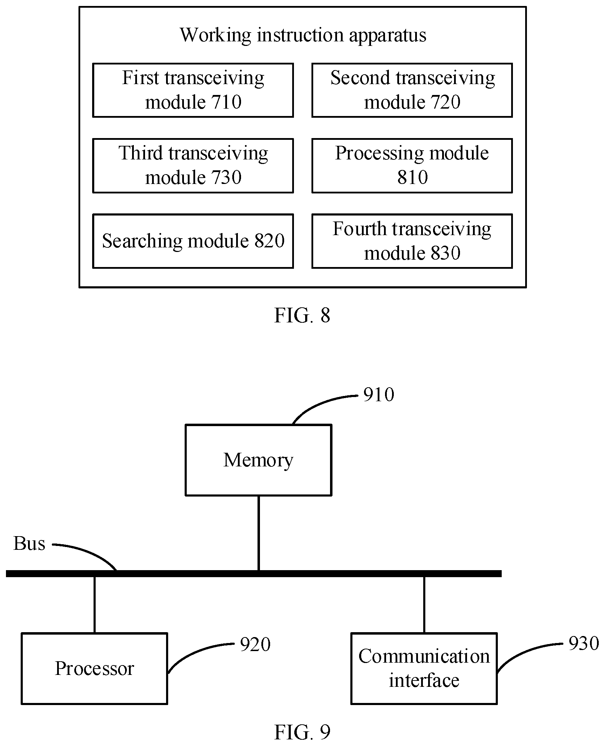

FIG. 8 is a schematic block diagram of a working instruction apparatus according to another embodiment of the present disclosure. The working instruction apparatus may include one or more features of the above working instruction apparatus. In an implementation, the working instruction apparatus further includes:
a processing module 810 configured to activate a working instruction function of the first PLC in a case of satisfying one or more of following conditions:
the first PLC activates an online mode;
a type of the received request is the working instruction;
the target workstation needs the working instruction; or
the first PLC is successfully connected to the MES and the host computer, respectively.

In an implementation, the processing module 810 is configured to:
activate a working instruction function of the second PLC in a case of satisfying one or more of following conditions:
the second PLC activates an online mode;
the second PLC activates an automatic mode;
a type of the received request is the working instruction; or
the received request has a correct format.

In an implementation, the processing module 810 is further configured to construct the second working instruction request based on the first working instruction request, where the second working instruction request includes the working instruction identification carried in the first working instruction request and information of the target workstation; and
the second transceiving module 720 is further configured to send the second working instruction request to the MES, in a case where the second working instruction request is correct.

In an implementation, the first transceiving module 710 is further configured to send a first writing instruction to the second PLC, in a case where the second working instruction request is incorrect, the first writing instruction includes a first error code for indicating that the second working instruction request is incorrect.

In an implementation, the first transceiving module 710 is further configured to send a second writing instruction to the second PLC, in a case where the first writing instruction request is incorrect, the second writing instruction includes a second error code for indicating that the first writing instruction request is incorrect.

In an implementation, the second transceiving module 720 is further configured to receive the working instruction response returned by the MES, the working instruction response includes the working instruction type information and a first response string variable, where the working instruction type information includes a working type of the target workstation which needs an instruction, and where the first response string variable is one or more of a type, a serial number or associated display device information of the target workstation obtained by parsing the information of the target workstation by the MES;
the processing module 810 is further configured to parse the first response string variable in a case where a format of the first response string variable is correct; and convert the format of the first response string variable, to obtain a second response string variable; and
the third transceiving module 730 is further configured to send the working instruction type information and the second response string variable to the host computer.

In an implementation, the first transceiving module 710 is further configured to send a third writing instruction to the second PLC, in a case where the first response string variable is incorrect, the third writing instruction includes a third error code for indicating the first response string variable is incorrect; send a fourth writing instruction to the second PLC, in a case where the third writing instruction is incorrect, the fourth writing instruction includes a fourth error code for indicating that the third writing instruction is incorrect.

In an implementation, the working instruction apparatus further includes:
a searching module 820 configured to search, in the host computer, corresponding working instruction contents in a working instruction database based on the working instruction type information; and
a fourth transceiving module 830 configured to send the working instruction contents to the display device connected to the target workstation, based on the type, the serial number and the associated display device information of the target workstation.

The searching module 820 and the fourth transceiving module 830 are deposed in the host computer.

In an implementation, the third transceiving module 730 is further configured to receive working instruction completion information returned by the host computer; and
the processing module 810 is further configured to perform a reset operation, in a case where a format of the working instruction completion information is correct.

In an implementation, the reset operation includes one or more of:
resetting a control bit corresponding to the first PLC to zero;
resetting a data region of the MES; or
resetting a data region of the host computer.

The descriptions to specific functions and examples of each of modules and sub-modules of the apparatus according to the embodiments of the present disclosure may refer to the relevant descriptions to the corresponding steps in the above method embodiments, which will not be repeated herein.

In the technical solution of the present disclosure, acquisition, storage and application of the user's personal information involved are all in compliance with provisions of relevant laws and regulations, and do not violate public order and good customs.

FIG. 9 is a structural block diagram of an electronic device according to an embodiment of the present application. As shown in FIG. 9, the electronic device includes a memory 910 and a processor 920, a computer program capable of being run on the processer 920 is stored in the memory 910. The number of each of the memory 910 and processor 920 may be one or more. The memory 910 may store one or more computer programs, which, when the one or more computer programs are executed by the electronic device, cause the electronic device performs the method provided in the above method embodiments. The electronic device may also include a communication interface 930 configured to communicate with an external device for carrying out data interactive transmission.

If the memory 910, the processor 920 and the communication interface 930 are implemented independently, the memory 910, the processor 920 and the communication interface 930 may be connected to each other and complete communication with each other through a bus. The bus may be an Industry Standard Architecture (ISA) bus, a Peripheral Component Interconnect (PCI) bus, an Extended Industry Standard Architecture (EISA) bus or the like. The bus may be divided into an address bus, a data bus, a control bus and the like. For ease of representation, the bus is shown by only one thick line in FIG. 9, which does not mean that there is only one bus or one type of bus.

Alternatively, in specific implementation, if the memory 910, the processor 920 and the communication interface 930 are integrated on one chip, the memory 910, the processor 920 and the communication interface 930 may complete communication with each other through internal interfaces.

It should be understood that the above processor may be a central processing unit (CPU), or may be another general-purpose processor, a digital signal processing (DSP), an application specific integrated circuit (ASIC), a field programmable gate array (FPGA) or another programmable logic device, a discrete gate or a transistor logic device, a discrete hardware component, or the like. The general-purpose processor may be a microprocessor or any conventional processor, etc. It is worth noting that the processor may be a processor that supports the Advanced RISC Machines (ARM) architecture.

Furthermore, alternatively, the above memory may include a read-only memory and a random-access memory, and may also include a non-volatile random-access memory. The memory may be either a volatile memory or a non-volatile memory, or it may include both the volatile and non-volatile memories. Where the non-volatile memory may include a read-only memory (ROM), a programmable ROM (PROM), an erasable programmable PROM (EPROM), an electrically erasable programmable ROM (EEPROM), or a flash memory. The volatile memory may include a random-access memory (RAM), which is used as an external cache. With illustrative but not restrictive illustrations, many forms of RAM are available, for example, a static RAM (SRAM), a dynamic RAM (DRAM), a synchronous DRAM (SDRAM), a double data date SDRAM (DDR SDRAM), an enhanced SDRAM (ESDRAM), a Synchlink DRAM (SLDRAM) and a direct RAMBUS RAM (DR RAM).

In the above embodiments, it may be realized in whole or in part by software, hardware, firmware, or any combination thereof. When implemented using software, it may be implemented in whole or in part in a form of a computer program product. The computer program product includes one or more computer instructions. When the computer instructions are loaded and executed on a computer, a process or function described in the embodiments of the present disclosure is produced in whole or in part. The computer may be a general-purpose computer, a specialized computer, a computer network, or another programmable apparatus. The computer instructions may be stored in a computer-readable storage medium, or transmitted from a computer-readable storage medium to another computer-readable storage medium, for example, the computer instructions may be transmitted from a website site, computer, server or data center to another website site, computer, computer, server or data center by a wired (e.g., coaxial cable, optical fiber, data subscriber line (DSL)) or wireless (e.g., infrared, Bluetooth, microwave, etc.) manner. The computer-readable storage medium may be any available medium that the computer can access, or may be a data storage device such as a server, a data center, etc., which is integrated with one or more available medium. The available medium may be a magnetic medium (e.g., a floppy disk, a hard disk, a magnetic tape), an optical medium (e.g., a digital versatile disc (DVD)) or a semiconductor medium (e.g., a solid-status disk (SSD)) and the like. It should note that the computer-readable storage medium referred to in the present disclosure may be a non-volatile storage medium, in other words, a non-transient storage medium.

Those having ordinary skills in the art may understand that all or part of the steps to realize the above embodiments may be completed by hardware, or by instructing related hardware by a program, and the program may be stored in a computer-readable storage medium, and the storage medium mentioned above may be a read-only memory, a disk, an optical disc, or the like.

In descriptions to the embodiments of the present disclosure, descriptions referring to terms "an embodiment", "some embodiments", "an example", "a specific example", or "some examples" or the like mean that specific features, structures, materials, or characteristics described in the embodiment(s) or example(s) are included in at least one embodiment or example of the present disclosure. Furthermore, the described specific features, structures, materials, or characteristics may be combined in an appropriate manner in any one or more embodiments or examples. In addition, without contradicting with each other, those having skills in the art may combine and integrate different embodiments or examples described in this Description and features of the different embodiments or examples.

In the descriptions to the embodiments of the present disclosure, unless otherwise indicated, "/" means "or", for example, A/B may mean A or B. The word "and/or" herein is merely an associated relationship for describing associated objects, which indicates that there may be three kinds of relationships, for example, A and/or B may mean that there are three cases: A alone, both A and B, and B alone.

In the descriptions to the embodiments of the present disclosure, terms "first", "second" are used only for a descriptive purpose and should not be construed as indicating or implying relative importance or implying the number of technical features indicated. Thus, features defined with the terms "first", "second" may explicitly or implicitly include one or more of these features. In the descriptions to the embodiments of the present disclosure, unless otherwise specified, "a/the plurality of" means two or more of them.

The foregoing is only example embodiments of the present disclosure, but is not used to limit the present disclosure, all changes, substitutions and improvements within the scope of the present disclosure should be included in the protection scope of the present disclosure.

## Claims

1. A working instruction method, applied to a production control system, **characterized in that** the production control system comprises a host computer (201), a manufacturing execution system, MES (202), a first programmable logic controller, PLC (203), second PLCs (204), workstations (205) and display devices (206), the host computer (201) is connected to the first PLC (203) and the display devices (206) respectively, the first PLC (203) is connected to the MES (202) and one or more of the second PLCs (204), a second PLC (204) is connected to one or more of the workstations (205), and a display device (206) is connected to one or more of the workstations (205),
wherein the working instruction method comprises:
obtaining (S110), by the first PLC (203), a first working instruction request from the second PLC (204), wherein the first working instruction request comprises a working instruction identification requested by a target workstation;
sending (S120), by the first PLC (203), a second working instruction request to the MES (202) based on the first working instruction request, wherein the second working instruction request comprises the working instruction identification;
receiving (S130), by the first PLC (203), a working instruction response returned by the MES (202) based on the working instruction identification, wherein the working instruction response comprises working instruction type information;
sending (S140), by the first PLC (203), the working instruction type information to the host computer (201); and
searching, by the host computer (201), working instruction contents based on the working instruction type information and sending the working instruction contents to a display device connected to the target workstation.

2. The method of claim 1, wherein the working instruction identification comprises a service identification, which needs to request a working instruction, written to the second PLC (204) by the target workstation.

3. The method of claim 2, wherein the method further comprises:
activating, by the first PLC (203), a first working instruction function, in a case of one or more of following conditions are satisfied:
the first PLC (203) activates an online mode;
a type of the received request is the working instruction;
the target workstation needs the working instruction; or
the first PLC (203) is successfully connected to the MES (202) and the host computer (201), respectively.

4. The method of claim 2, wherein the method further comprises:
activating, by the second PLC (204), a second working instruction function, in a case of one or more of following conditions are satisfied:
the second PLC (204) activates an online mode;
the second PLC (204) activates an automatic mode;
a type of the received request is the working instruction; or
the received request has a correct format.

5. The method of claim 3 or 4, wherein sending, by the first PLC (203), the second working instruction request to the MES (202) based on the first working instruction request comprises:
constructing (S310), by the first PLC (203), the second working instruction request based on the first working instruction request, wherein the second working instruction request comprises the working instruction identification carried in the first working instruction request and information of the target workstation; and
sending (S320), by the first PLC (203), the second working instruction request to the MES (202), in a case where the second working instruction request is correct.

6. The method of claim 5, wherein the method further comprises:
sending (S330), by the first PLC (203), a first writing instruction to the second PLC (204), in a case where the second working instruction request is incorrect, the first writing instruction comprises a first error code for indicating that the second working instruction request is incorrect.

7. The method of claim 6, wherein receiving, by the first PLC (203), the working instruction type information returned by the MES (202) based on the working instruction identification comprises:
receiving (S410), by the first PLC (203), the working instruction response returned by the MES (202), the working instruction response comprises the working instruction type information and a first response string variable, wherein the working instruction type information comprises a working type of the target workstation which needs an instruction, and wherein the first response string variable is one or more of a type, a serial number or associated display device information of the target workstation obtained by parsing the information of the target workstation by the MES (202);
parsing (S420), by the first PLC (203), the first response string variable in a case where a format of the first response string variable is correct;
converting (S430), by the first PLC (203), the format of the first response string variable, to obtain a second response string variable; and
sending (S440), by the first PLC (203), the working instruction type information and the second response string variable to the host computer (201).

8. The method of claim 7, wherein the method further comprises:
sending (S510), by the first PLC (203), a third writing instruction to the second PLC (204), in a case where the first response string variable is incorrect, the third writing instruction comprises a third error code for indicating the first response string variable is incorrect;
sending (S520), by the first PLC (203), a fourth writing instruction to the second PLC (204), in a case where the third writing instruction is incorrect, the fourth writing instruction comprises a fourth error code for indicating that the third writing instruction is incorrect.

9. The method of claim 8, wherein searching, by the host computer (201), the working instruction contents based on the working instruction type information and sending the working instruction contents to the display device connected to the target workstation comprises:
searching, by the host computer (201), corresponding working instruction contents in a working instruction database based on the working instruction type information; and
sending, by the host computer (201), the working instruction contents to the display device connected to the target workstation, based on the type, the serial number and the associated display device information of the target workstation.

10. The method of claim 9, wherein the method further comprises:
receiving, by the first PLC (203), working instruction completion information returned by the host computer (201); and
performing, by the first PLC (203), a reset operation, in a case where a format of the working instruction completion information is correct;
wherein the reset operation comprises one or more of:
resetting a control bit corresponding to the first PLC (203) to zero;
resetting a data region of the MES (202); or
resetting a data region of the host computer (201).

11. A production control system, **characterized by** comprising a host computer (201), a manufacturing execution system, MES (202), a first programmable logic controller, PLC (203), second PLCs (204), workstations (205) and display devices (206), the host computer (201) is connected to the first PLC (203) and the display devices (206) respectively, the first PLC (203) is connected to the MES (202) and one or more of the second PLCs (204), a second PLC (204) is connected to one or more of the workstations (205), and a display device (206) is connected to one or more of the workstations (205);
wherein the first PLC (203) is configured to:
obtain a first working instruction request from the second PLC (204), wherein the first working instruction request comprises a working instruction identification requested by a target workstation;
send a second working instruction request to the MES (202) based on the first working instruction request, and receive a working instruction response returned by the MES (202) based on the working instruction identification, wherein the second working instruction request comprises the working instruction identification, and the working instruction response comprises working instruction type information; and
send the working instruction type information to the host computer (201);
wherein the host computer (201) is configured to: search working instruction contents in the host computer (201) based on the working instruction type information and send the working instruction contents to a display device connected to the target workstation.

12. The production control system of claim 11, wherein the working instruction identification comprises a service identification, which needs to request a working instruction, written to the second PLC (204) by the target workstation.

13. The production control system of claim 12, wherein the first PLC (203) is further configured to activate a first working instruction function, in a case of one or more of following conditions are satisfied:
the first PLC (203) activates an online mode;
a type of the received request is the working instruction;
the target workstation needs the working instruction; or
the first PLC (203) is successfully connected to the MES (202) and the host computer (201), respectively.

14. The production control system of claim 13, wherein the second PLC (204) is configured to activate a second working instruction function, in a case of one or more of following conditions are satisfied:
the second PLC (204) activates an online mode;
the second PLC (204) activates an automatic mode;
a type of the received request is the working instruction; or
the received request has a correct format.

15. The production control system of claim 13 or 14, wherein the first PLC (203) is further configured to:
construct the second working instruction request based on the first working instruction request, wherein the second working instruction request comprises the working instruction identification carried in the first working instruction request and information of the target workstation; and
send the second working instruction request to the MES (202), in a case where the second working instruction request is correct.
